# EUROPEAN PATENT APPLICATION

(11) **EP 4 617 874 A1**
(43) Date of publication of application: **17.09.2025**
(21) Application number: 23896008.2
(22) Date of filing: 29.06.2023
(51) Int. Cl.: G06F 9/50, G06F 12/02

(54) **MEMORY ACCESS METHOD AND RELATED DEVICE**

(30) Priority: 29.11.2022 CN 202211513508; 09.03.2023 CN 202310255341
(71) Applicant: Huawei Technologies Co., Ltd., Shenzhen, Guangdong 518129 (CN)
(72) Inventor: PAN, Wei, Shenzhen, Guangdong 518129 (CN); LEE, Wei Jian, Shenzhen, Guangdong 518129 (CN); WU, Pingyu, Shenzhen, Guangdong 518129 (CN)
(74) Representative: Grünecker Patent- und Rechtsanwälte PartG mbB
(86) International application number: PCT/CN2023/104219
(87) International publication number: WO 2024/113844

(57) **Abstract**

This application discloses a memory access method and a related apparatus, and belongs to a computer field. The method includes: A cache controller receives a memory access instruction sent by a processor core, where the memory access instruction is used to access a target memory space; and the cache controller determines, based on mirroring indication information in a target cache line that is in a cache and that corresponds to the memory access instruction, whether the target memory space is a mirrored memory space. In this application, a problem that a delay increases when mirroring indication information is obtained from a memory can be avoided, to improve memory access efficiency.

## Description

This application claims priority to Chinese Patent Application No. 202211513508.2, filed with the China National Intellectual Property Administration on November 29, 2022 and entitled "DYNAMIC MEMORY MIRRORING PROCESSING METHOD", and to Chinese Patent Application No. 202310255341.2, filed with the China National Intellectual Property Administration on March 9, 2023 and entitled "MEMORY ACCESS METHOD AND RELATED APPARATUS", which are incorporated herein by reference in their entireties.

### TECHNICAL FIELD

This application relates to the computer field, and in particular, to a memory access method and a related apparatus.

### BACKGROUND

Memory mirroring (memory mirroring) is a memory protection technology. A memory space for which a memory mirroring function is enabled includes a primary memory space and a secondary memory space. The primary memory space is used for a memory controller to read data, and the secondary memory space is used to store a backup of data in the primary memory space. When one of the primary memory space and the secondary memory space is faulty, a computer device can restore data from the other memory space, to improve memory stability and availability.

A related technology provides a memory access method based on dynamic memory mirroring. In the method, after a memory access instruction is received, whether a dynamic memory mirroring function is enabled for a target memory space to be accessed according to the memory access instruction is determined based on a page table entry in the target memory space. If the dynamic memory mirroring function is enabled for the target memory space, an operation corresponding to the memory access instruction is performed on both a primary memory space and a secondary memory space that are included in the target memory space.

However, in the foregoing method, in a process of implementing the dynamic memory mirroring, memory access efficiency may be low.

### SUMMARY

This application provides a memory access method and a related apparatus, to improve security of mirrored memory data. The technical solutions are as follows.

According to a first aspect, a memory access method is provided. The method includes: A cache controller receives a memory access instruction sent by a processor core, where the memory access instruction is used to access a target memory space; and the cache controller determines, based on mirroring indication information in a target cache line that is in a cache and that corresponds to the memory access instruction, whether the target memory space is a mirrored memory space.

In a related technology, after receiving a memory access instruction, a processor core needs to obtain, via a memory controller, mirroring indication information stored in a page table entry in a target memory space, and then determine, by using the mirroring indication information, whether the target memory space is a mirrored memory space. In other words, the page table entry in a memory stores the mirroring indication information in the target memory space, and the mirroring indication information is used to determine whether the target memory space is a mirrored memory space. However, in this application, each cache line that is in the cache and that is used to cache data in the target memory space caches the mirroring indication information, and the mirroring indication information is used to determine whether the target memory space is a mirrored memory space. In this way, after receiving the memory access instruction sent by the processor core, the cache controller determines, by using the mirroring indication information in the target cache line corresponding to the memory access instruction, whether the target memory space is a mirrored memory space, and does not need to determine, by accessing a memory, whether the target memory space is a mirrored memory space. This can avoid a problem that a delay increases when the mirroring indication information in the memory is obtained, to improve memory access efficiency.

Usually, the cache includes a plurality of cache lines, and each cache line includes a data area and a non-data area. The data area is used to store a part of data in the memory. The non-data area includes a mirroring indication field. The mirroring indication field is used to record mirroring indication information, and the mirroring indication information indicates whether a memory space in which data stored in the data area is located is a mirrored memory space. Therefore, for the target cache line, the target cache line includes a data area and a non-data area, the data area stores to-be-accessed data, the non-data area includes a mirroring indication field, and the mirroring indication field is used to record the mirroring indication information.

Because only the part of data in the memory may be cached in the cache, the target cache line may not exist in the cache. In this case, the mirroring indication information may be obtained from the memory to determine whether the target memory space is a mirrored memory space. To be specific, if the target cache line does not exist in the cache, the cache controller determines, based on the mirroring indication information in a target non-data area that is in the target memory space and that corresponds to the memory access instruction, whether the target memory space is a mirrored memory space.

When the target cache line does not exist in the cache, whether the target memory space is a mirrored memory space may alternatively be determined by using the mirroring indication information in the target memory space. In this way, reliability of memory access can be ensured.

Usually, the target memory space includes a plurality of data areas and a plurality of non-data areas. The plurality of data areas are in one-to-one correspondence with the plurality of non-data areas. The non-data areas include the mirroring indication information. The mirroring indication information indicates whether a memory space in which data in a corresponding data area is located is a mirrored memory space. Therefore, for the target non-data area, a target data area corresponding to the target non-data area further exists in the target memory space. In other words, the target memory space includes the target data area and the target non-data area, the target data area stores to-be-accessed data, and the target non-data area stores the mirroring indication information.

In a possible implementation, if the target memory space is a mirrored memory space, and the memory access instruction indicates a mirrored access mode, the cache controller performs, on the target memory space, an operation corresponding to the memory access instruction.

In another possible implementation, if the target memory space is a mirrored memory space, and the memory access instruction indicates a non-mirrored access mode, the cache controller rejects execution of the memory access instruction.

When it is determined, by using the foregoing method, that the target memory space is a mirrored memory space, and the memory access instruction indicates the non-mirrored access mode, the cache controller may reject execution of the memory access instruction. In this way, unauthorized access to the mirrored memory data can be avoided, and security of mirrored memory data can be improved.

Whether the non-mirrored access mode is rejected in the mirrored memory space may alternatively be configured. In this way, when the target memory space is a mirrored memory space, and the memory access instruction indicates the non-mirrored access mode, the cache controller may further obtain mirroring configuration information of the target memory space. The mirroring configuration information indicates whether access to the target memory space in the non-mirrored access mode is rejected. If the mirroring configuration information indicates that access to the target memory space in the non-mirrored access mode is rejected, the cache controller rejects execution of the memory access instruction.

In a possible implementation, if the mirroring configuration information indicates that access to the target memory space in the non-mirrored access mode is allowed, the cache controller performs, on the target memory space, the operation corresponding to the memory access instruction.

The mirroring configuration information of the target memory space may be set when the target memory space is allocated, in other words, the mirroring configuration information of the target memory space is preset. Certainly, during actual application, the mirroring configuration information of the target memory space may alternatively be adjusted based on different requirements.

In a possible implementation, the memory access instruction is a memory write instruction, the memory write instruction carries target data to be written, and the target memory space includes a primary memory space and a secondary memory space. In this case, that the cache controller performs, on the target memory space, an operation corresponding to the memory access instruction includes: The cache controller sends a memory write notification to a memory controller, to indicate the memory controller to write the target data into both the primary memory space and the secondary memory space.

The target memory space is allocated to a target object in advance. To be specific, a memory allocation request of the target object is received, where the memory allocation request is used to request the target memory space; and in response to a case in which a mirroring flag of the target object is set, the target memory space is allocated to the target object, and the mirroring indication information in each non-data area in the target memory space is set.

The target object is a software module that is in a computer device and that is allowed to occupy a memory space. For example, the target object includes but is not limited to a process, a kernel, a part of a VMA segment of the process, or some of modules in the kernel. The memory allocation request indicates to allocate the target memory space to the target object. In a possible implementation, different types of target objects have different mirroring flags. For example, a mirroring flag of the kernel is different from a mirroring flag of the process.

After the memory allocation request of the target object is received, if the mirroring flag of the target object is set, it indicates that currently, the target memory space needs to be allocated to the target object, and a memory mirroring function needs to be enabled for the target memory space. Therefore, after the target memory space is allocated to the target object, the mirroring indication information in each non-data area in the target memory space may be set, to enable the memory mirroring function of the target memory space. In other words, in this embodiment of this application, whether the memory mirroring function needs to be enabled for the memory space allocated to the target object may be determined based on a requirement of the target object.

In the foregoing manner, mirroring protection is performed on the memory that is actually requested to be allocated when the target object runs, to avoid a waste of memory resources caused by a preset mirrored memory that is excessively large, and avoid service interruption caused by a preset mirrored memory that is insufficient.

When the target memory space needs to be released for the target object, the memory mirroring function of the target memory space may alternatively be canceled, to facilitate memory space recycling. To be specific, a memory release request of the target object is received, where the memory release request is used to release the target memory space; and the target memory space allocated to the target object is released, and setting of the mirroring indication information in each non-data area in the target memory space is canceled.

According to a second aspect, a processor is provided. The processor includes a cache controller, and the cache controller is configured to implement the method provided in the first aspect.

According to a third aspect, a memory access apparatus is provided. The memory access apparatus includes a processor and a storage. The storage is configured to store a computer program for performing the memory access method provided in the first aspect. The processor is configured to execute the computer program stored in the storage, to implement the memory access method according to the first aspect.

Optionally, the memory access apparatus may further include a communication bus, and the communication bus is configured to establish a connection between the processor and the storage.

According to a fourth aspect, a computer-readable storage medium is provided. The storage medium stores instructions, and when the instructions are run on a computer, the computer is enabled to perform the memory access method according to the first aspect.

According to a fifth aspect, a computer program product including instructions is provided. When the instructions are run on a computer, the computer is enabled to perform the steps of the memory access method according to the first aspect. In other words, a computer program is provided. When the computer program is run on a computer, the computer is enabled to perform the memory access method according to the first aspect.

Technical effects achieved in the second aspect to the fifth aspect are similar to technical effects achieved by corresponding technical means in the first aspect. Details are not described herein again.

### BRIEF DESCRIPTION OF DRAWINGS

FIG. 1 is a diagram of a structure of a computer device according to an embodiment of this application;
FIG. 2 is a flowchart of a memory access method according to an embodiment of this application;
FIG. 3 is a diagram of a structure of a cache line and a memory according to an embodiment of this application;
FIG. 4 is a diagram of a memory read instruction processing method according to an embodiment of this application;
FIG. 5 is a diagram of a memory write instruction processing method according to an embodiment of this application; and
FIG. 6 is a diagram of a structure of a memory access apparatus according to an embodiment of this application.

### DESCRIPTION OF EMBODIMENTS

To make objectives, the technical solutions, and advantages of embodiments of this application clearer, the following further describes implementations of this application in detail with reference to the accompanying drawings.

Before a memory access method provided in embodiments of this application is described in detail, terms and implementation environments in embodiments of this application are first described.

First, the terms in embodiments of this application are explained.

### 1. Memory space for which a memory mirroring function is enabled

The memory space for which the memory mirroring function is enabled includes two independent physical memory spaces. One physical memory space is used as a primary memory space, and the other physical memory space is used as a secondary memory space. When a process, a kernel, or another object initiates a data write instruction for the memory space for which the memory mirroring function is enabled, data is written to both the primary memory space and the secondary memory space, so that two identical copies of data exist in the memory.

Usually, the primary memory space is used for reading and writing, and the secondary memory space is used to store a backup of data. If the primary memory space is faulty, memory data can be restored from the secondary memory space. Similarly, if the secondary memory space is faulty, the memory data can also be restored from the primary memory space.

In some embodiments, the memory space for which the memory mirroring function is enabled is also referred to as a mirrored memory space. Subsequently, the mirrored memory space is used to represent the memory space for which the memory mirroring function is enabled.

### 2. Mirroring indication information (mirror indicator)

The mirroring indication information is indication information used to distinguish the mirrored memory space, in other words, whether a memory space is a mirrored memory space can be distinguished by using the mirroring indication information.

### 3. Mirroring flag carried in a memory access instruction

The mirroring flag carried in the memory access instruction is used to distinguish whether the memory space needs to be accessed in a mirrored access mode by using the memory access instruction.

### 4. Mirroring flag of a target object

The mirroring flag of the target object is used to distinguish whether the memory mirroring function is enabled for a memory space allocated to the target object. For example, when the mirroring flag is set (for example, set to 1), it indicates that the memory mirroring function needs to be enabled for the memory space allocated to the target object. When the mirroring flag is not set (for example, set to 0), it indicates that only a memory space of a requested size is allocated, and the memory mirroring function does not need to be enabled. For example, a process A sends a memory allocation request, where the memory allocation request indicates to allocate a memory space of one page to the process A. If a mirroring flag of the process A is 1, two physical pages are allocated to the process A, where one physical page is a primary memory space, and the other physical page is a secondary memory space. If a mirroring flag of process A is 0, one physical page is allocated to the process A.

The mirroring flag is, for example, an input parameter of a memory allocation function. The mirroring flag indicates to allocate, when the memory allocation function is executed, the memory space for which memory mirroring function is enabled. For example, the memory allocation function is a kmalloc function, and the mirroring flag is a get free pages (get free pages, GFP) allocation flag (also referred to as a memory allocation flag or a flag parameter) of the kmalloc function. For another example, the memory allocation function is a vmalloc function, and the mirroring flag is a virtual address space (virtual memory area, VMA) flag in the vmalloc function.

### 5. Cache line (cache line)

A cache is hardware that caches data in a memory. The cache line is a basic unit for the cache. A cache line size (cache line size) is a data size of the cache line. When accessing the memory, a computer device migrates the data in the memory to the cache in a unit of the cache line size. For example, the cache line size is N bytes, and when accessing the memory, the computer device migrates at least N bytes of the data in the memory to the cache at a time.

### 6. Direct memory access (direct memory access, DMA)

The direct memory access is a technology in which the memory can be accessed without using a processor. To be specific, before the direct memory access, the processor may hand over a control right of a bus to a DMA controller. In this way, an input/output (input/output, I/O) device may directly access the memory via the DMA controller without using the processor. After the direct memory access is complete, the DMA controller immediately returns the control right of the bus to the processor. In an entire direct memory access process, the processor may process another task, so that utilization of the processor can be improved.

### 7. Direct cache access (direct cache access, DCA)

The direct cache access is a technology in which a cache of the processor can be accessed without using the processor. The direct cache access is an improved technology of the direct memory access, that is, the I/O device can directly access the cache of the processor. This helps reduce an I/O delay and reduce memory bus utilization.

Then, the implementation environments in embodiments of this application are described.

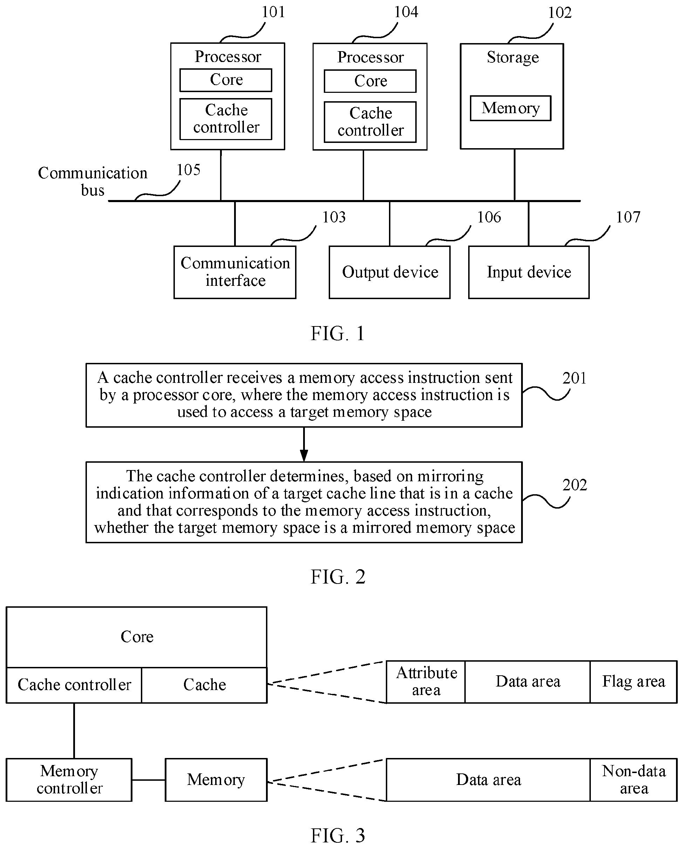

FIG. 1 is a diagram of a structure of a computer device according to an embodiment of this application. The computer device may be a server, or may be another device. The computer device includes a processor 101, a storage 102, and a communication interface 103.

The processor 101 includes at least one processor core, that is, the processor 101 may be a single-core processor, or may be a multi-core processor. Each processor core corresponds to a cache (cache) and a cache controller. In other words, the processor 101 includes the processor core, the cache, and the cache controller.

After receiving a memory access instruction that is for a to-be-accessed target memory space and that is sent by an I/O device, the processor core may send the memory access instruction to the cache controller corresponding to the processor core. The cache controller searches the cache corresponding to the processor core and a cache corresponding to another processor core for a target cache line corresponding to the memory access instruction. After the target cache line is found, whether the target memory space is a mirrored memory space may be determined based on mirroring indication information in the target cache line. When the target memory space is a mirrored memory space, and the memory access instruction indicates a non-mirrored access mode, the cache controller may reject execution of the memory access instruction.

In some embodiments, the storage 102 may include a memory, and the computer device further includes a memory controller (memory controller, MC). The storage 102 may communicate, via the MC, with the cache controller corresponding to each processor core. When the cache controller does not find the target cache line, the cache controller may further search the memory for the corresponding mirroring indication information via the MC, to determine whether the target memory space is a mirrored memory space.

In some embodiments, the cache controller may also be referred to as a caching and home agent (caching and home agent, CHA). The cache controller is configured to control read and write of the cache. The MC is configured to control reading and writing of the memory, and a location relationship between the MC and the processor includes a plurality of cases. For example, the MC may be disposed inside the processor, in other words, the MC is integrated with the processor. Alternatively, the MC may be disposed outside the processor, in other words, the MC and the processor are disposed separately. This is not shown in FIG. 1.

The processor 101 may be a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD) or a combination thereof. The PLD may be a complex programmable logic device (complex programmable logic device, CPLD), a field programmable gate array (field programmable gate array, FPGA), generic array logic (generic array logic, GAL), or any combination thereof.

The storage 102 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be configured to carry or store expected program code in a form of an instruction or a data structure and that can be accessed by a computer. The storage 102 is not limited thereto. The storage 102 may exist independently, and is connected to the processor 101. Alternatively, the storage 102 may be integrated with the processor 101.

The communication interface 103 is any apparatus such as a transceiver, and is configured to communicate with another device or a communication network. The communication interface 103 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In some embodiments, the computer device may include a plurality of processors, for example, the processor 101 and a processor 104 shown in FIG. 1. The processor herein may be one or more devices, circuits, and/or processors configured to process data (for example, computer program instructions).

In some embodiments, the computer device may further include a communication bus 105. The communication bus 105 is configured to transfer information between the foregoing components. The communication bus 105 may be classified into an address bus, a data bus, a control bus, or the like. For ease of representation, only one thick line is used to represent the bus in the figure, but this does not mean that there is only one bus or only one type of bus.

In some embodiments, the computer device may further include an output device 106 and an input device 107. The output device 106 communicates with the processor 101, and may display information in a plurality of manners, for example, data read from the memory. The input device 107 communicates with the processor 101, and may receive, in a plurality of manners, a command or data that is entered by a user and that is related to the following method embodiments.

For example, the output device 106 may be a liquid crystal display (liquid crystal display, LCD), a light emitting diode (light emitting diode, LED) display device, a cathode ray tube (cathode ray tube, CRT) display device, or a projector (projector). The input device 107 may be a mouse, a keyboard, a touchscreen device, a sensor device, or the like.

In some embodiments, the storage 102 is configured to store program code for performing the solutions of this application, and the cache controller implements a method in the following embodiments by reading and executing the program code stored in the storage 102. Alternatively, the memory of the processor 101 stores program code, and the cache controller implements a method in the following embodiments by executing the program code stored in the processor 101. The program code may include one or more software modules, for example, a module in a subsequent apparatus embodiment.

After the terms and the implementation environment in embodiments of this application are described, the following describes in detail the memory access method provided in embodiments of this application.

FIG. 2 is a flowchart of a memory access method according to an embodiment of this application. Refer to FIG. 2. The method includes the following steps.

Step 201: A cache controller receives a memory access instruction sent by a processor core, where the memory access instruction is used to access a target memory space.

The memory access instruction instructs to perform a data read operation or a data write operation on the target memory space. When the memory access instruction instructs to perform the data read operation on the target memory space, the memory access instruction may carry a memory address of the target memory space. When the memory access instruction instructs to perform the data write operation on the target memory space, the memory access instruction may carry a memory address of the target memory space and target data to be written.

The target memory space is a space that is in a memory of a computer device and that currently needs to be accessed. The target memory space may be a mirrored memory space, or may be a non-mirrored memory space. In other words, a memory mirroring function may be enabled for the target memory space, or a memory mirroring function may not be enabled for the target memory space.

Because a cache access speed is higher than a memory access speed, to improve memory access efficiency, in this embodiment of this application, a part of data in the target memory space is cached in a cache corresponding to the processor core, and mirroring indication information in the target memory space may be cached in the cache corresponding to the processor core. Therefore, after receiving the memory access instruction, the processor core may send the memory access instruction to the cache controller, so that the cache controller performs subsequent processing based on data in the cache.

Step 202: The cache controller determines, based on the mirroring indication information in a target cache line that is in the cache and that corresponds to the memory access instruction, whether the target memory space is a mirrored memory space.

Based on the foregoing descriptions, the target memory space may be the mirrored memory space, or may be the non-mirrored memory space, and the mirroring indication information can be used to distinguish whether the target memory space is a mirrored memory space. In addition, in a process in which the part of data in the target memory space is cached in the cache corresponding to the processor core, the mirroring indication information may also be cached in the cache corresponding to the processor core. In this way, the cache controller may determine, based on the mirroring indication information in the cache, whether the target memory space is a mirrored memory space, without obtaining the mirroring indication information from the memory, to improve efficiency of determining the mirrored memory space.

Usually, the cache includes a plurality of cache lines, and each cache line includes a data area and a non-data area. The data area is used to store a part of data in the memory. The non-data area includes a mirroring indication field. The mirroring indication field is used to record mirroring indication information, and the mirroring indication information indicates whether a memory space in which data stored in the data area is located is a mirrored memory space. Therefore, for the target cache line, the target cache line includes a data area and a non-data area, the data area stores to-be-accessed data, the non-data area includes a mirroring indication field, and the mirroring indication field is used to record the mirroring indication information.

In some embodiments, the non-data area of each cache line may further store a memory address corresponding to the data in the data area. In addition, based on the foregoing descriptions, the memory access instruction may carry the memory address of the target memory space. Therefore, the cache controller may compare the memory address of the target memory space with the memory address of the non-data area of each cache line, to determine a cache line that matches the memory address of the target memory space, and use the cache line as the target cache line.

Usually, after the target memory space is allocated, whether the target memory space is a mirrored memory space is determined. In this case, cache lines used to cache the data in the target memory space have same mirroring indication information. Therefore, whether the target memory space is a mirrored memory space may be determined by using the mirroring indication information in any one of these cache lines. To be specific, although the mirroring indication information in the non-data area of the target cache line indicates whether a memory space in which the data in the data area is located is a mirrored memory space, the memory space is located in the target memory space. Therefore, whether the target memory space is a mirrored memory space may also be determined by using the mirroring indication information in the target cache line.

In some embodiments, the mirroring indication information in the target cache line may be set or not set. When the mirroring indication information in the target cache line is set, it is determined that the target memory space is a mirrored memory space. When the mirroring indication information in the target cache line is not set, it is determined that the target memory space is not the mirrored memory space, that is, is a non-mirrored memory space.

In some cases, that the mirroring indication information is set may also be understood as that a value of the mirroring indication information is 1, and that the mirroring indication information is not set may be understood as that the value of the mirroring indication information is 0. Certainly, the two cases may be reversed. To be specific, that the mirroring indication information is set may also be understood as that the value of the mirroring indication information is 0, and that the mirroring indication information is not set may be understood as that the value of the mirroring indication information is 1. During actual application, whether the mirroring indication information is set may alternatively be represented in another manner. This is not limited in embodiments of this application.

Because only the part of data in the memory may be cached in the cache, the target cache line may not exist in the cache. In this case, the mirroring indication information may be obtained from the memory to determine whether the target memory space is a mirrored memory space. To be specific, if the target cache line does not exist in the cache, whether the target memory space is a mirrored memory space is determined based on the mirroring indication information in a target non-data area that is in the target memory space and that corresponds to the memory access instruction.

Usually, the target memory space includes a plurality of data areas and a plurality of non-data areas. The plurality of data areas are in one-to-one correspondence with the plurality of non-data areas. The non-data areas include the mirroring indication information. The mirroring indication information indicates whether a memory space in which data in a corresponding data area is located is a mirrored memory space. Therefore, for the target non-data area, a target data area corresponding to the target non-data area further exists in the target memory space. In other words, the target memory space includes the target data area and the target non-data area, the target data area stores to-be-accessed data, and the target non-data area stores the mirroring indication information.

Similarly, after the target memory space is allocated, whether the target memory space is a mirrored memory space is determined. In this case, non-data areas included in the target memory space have same mirroring indication information. Therefore, whether the target memory space is a mirrored memory space may be determined by using the mirroring indication information in any one of these non-data areas. To be specific, although the mirroring indication information in the target non-data area indicates whether the memory space in which the data in the target data area is located is a mirrored memory space, the memory space is located in the target memory space. Therefore, whether the target memory space is a mirrored memory space may also be determined by using the mirroring indication information in the target non-data area.

In some embodiments, the mirroring indication information in the target non-data area may be set or not set. When the mirroring indication information in the target non-data area is set, it is determined that the target memory space is a mirrored memory space. When the mirroring indication information in the target non-data area is not set, it is determined that the target memory space is not the mirrored memory space, that is, is a non-mirrored memory space.

For example, refer to FIG. 3. A processor core corresponds to a cache controller and a cache, the cache controller may further communicate with a memory controller, and the memory controller is configured to control a memory. A cache line includes a data area and a non-data area. The non-data area may include two parts: an attribute area and a flag area. The attribute area stores a memory address of data in the data area. The flag area includes a mirroring indication field, and the mirroring indication field is used to record mirroring indication information. The memory includes a plurality of data areas and a plurality of non-data areas. In FIG. 3, one data area and one non-data area are used as an example for description, and the non-data area stores mirroring indication information.

It should be noted that, for the non-data area of the cache line, an example in which the attribute area stores the memory address is used above. During actual application, the attribute area may further store other data. Similarly, an example in which the flag area stores the mirroring indication information is used above. During actual application, the flag area may further store another flag bit or the like. This is not limited in embodiments of this application. For the non-data area of the memory, an example in which the non-data area stores the mirroring indication information is used above. During actual application, the non-data area may further store other information. This is not limited in embodiments of this application either.

The memory may be a dual inline memory module (dual inline memory module, DIMM), a registered dual inline memory module (registered DIMM, RDIMM), or a load reduced dual inline memory module (load reduced DIMM, LRDIMM), or certainly, may be another memory module.

Based on the foregoing descriptions, the data in the cache is obtained by caching the data in the memory. Therefore, when data in a data area in the memory is cached, mirroring indication information in a non-data area corresponding to the data area may further be read, so that the mirroring indication information is also cached, to subsequently determine, by using the mirroring indication information in the cache, whether a memory space in which the data is located is a mirrored memory space.

It should be noted that, to cooperate with the cache line, a granularity of the data area in the memory may be the same as a granularity of the cache line, that is, a size of the data area in the memory may be the same as a size of the cache line.

In the foregoing descriptions, whether the cache includes the target cache line is first determined. When the target cache line is included, whether the target memory space is a mirrored memory space is directly determined based on the mirroring indication information in the target cache line. When the target cache line is not included, whether the target memory space is a mirrored memory space is determined based on the mirroring indication information in the target non-data area in the memory. Certainly, during actual application, whether the target memory space is a mirrored memory space may alternatively be directly determined based on the mirroring indication information in the target non-data area in the memory.

Whether the target memory space is a mirrored memory space can be determined according to the foregoing content, to facilitate a subsequent operation on the target memory space.

In some embodiments, if the target memory space is a mirrored memory space, and the memory access instruction indicates a non-mirrored access mode, the cache controller rejects execution of the memory access instruction.

When the target memory space is a mirrored memory space, and the memory access instruction indicates the non-mirrored access mode, it indicates that currently, the mirrored memory space needs to be accessed in the non-mirrored access mode, and unauthorized access may exist. Therefore, the cache controller can avoid unauthorized access to the mirrored memory data by rejecting execution of the memory access instruction, to improve security of the mirrored memory data.

The non-mirrored access mode means that the memory access instruction is not a mirrored access instruction. A mirrored access mode means that the memory access instruction is a mirrored access instruction, or the memory access instruction is not the mirrored access instruction but a parameter of the memory access instruction carries a mirroring flag. A format of the mirrored access instruction is different from a format of a common memory access instruction.

In some embodiments, whether the non-mirrored access mode is rejected in the mirrored memory space may alternatively be configured. In this way, when the target memory space is a mirrored memory space, and the memory access instruction indicates the non-mirrored access mode, the cache controller may further obtain mirroring configuration information of the target memory space. The mirroring configuration information indicates whether access to the target memory space in the non-mirrored access mode is rejected. If the mirroring configuration information indicates that access to the target memory space in the non-mirrored access mode is rejected, the cache controller rejects execution of the memory access instruction. If the mirroring configuration information indicates that access to the target memory space in the non-mirrored access mode is allowed, the cache controller performs, on the target memory space, an operation corresponding to the memory access instruction.

The mirroring configuration information of the target memory space may be set when the target memory space is allocated, in other words, the mirroring configuration information of the target memory space is preset. Certainly, during actual application, the mirroring configuration information of the target memory space may alternatively be adjusted based on different requirements. This is not limited in embodiments of this application.

In some embodiments, if the target memory space is a mirrored memory space, and the memory access instruction indicates the mirrored access mode, the cache controller performs, on the target memory space, the operation corresponding to the memory access instruction.

Based on the foregoing descriptions, the memory access instruction instructs to perform the data read operation or the data write operation on the target memory space. When the memory access instruction instructs to perform the data read operation on the target memory space, the cache controller may read the corresponding data from the target memory space based on the memory address carried in the memory access instruction. When the memory access instruction instructs to perform the data write operation on the target memory space, the cache controller may write, based on the memory address carried in the memory access instruction, the target data carried in the memory access instruction into the target memory space.

When the memory access instruction instructs to perform the data read operation on the target memory space, the cache controller may determine, based on the memory address carried in the memory access instruction, whether the corresponding data exists in the cache. If the corresponding data exists in the cache, the corresponding data may be directly read from the cache. If the corresponding data does not exist in the cache, the corresponding data may be read from the target memory space.

When the memory access instruction instructs to perform the data write operation on the target memory space, the cache controller may determine, based on the memory address carried in the memory access instruction, whether the corresponding cache line exists in the cache. If the corresponding cache line exists in the cache, the target data may be directly written into the cache, and then written into the target memory space. If the corresponding cache line does not exist in the cache, the target data may be written into the target memory space.

Based on the foregoing descriptions, the cache controller is configured to control reading and writing of the cache, and the memory controller is configured to control reading and writing of the memory. Therefore, regardless of reading the data from the target memory space or writing the data into the target memory space, the reading or the writing by the cache controller needs to be implemented via the memory controller. In other words, the cache controller reads the data from the target memory space via the memory controller, and writes the data into the target memory space via the memory controller.

In some embodiments, the memory access instruction is a memory write instruction, the memory write instruction carries the target data to be written, and the target memory space includes a primary memory space and a secondary memory space. In this case, the cache controller sends a memory write notification to the memory controller, to indicate the memory controller to write the target data into both the primary memory space and the secondary memory space. In other words, after receiving the memory write notification sent by the cache controller, the memory controller writes the target data into both the primary memory space and the secondary memory space.

The target memory space is allocated to a target object in advance. To be specific, a memory allocation request of the target object is received, where the memory allocation request is used to request the target memory space; and in response to a case in which a mirroring flag of the target object is set, the target memory space is allocated to the target object, and the mirroring indication information in each non-data area in the target memory space is set.

Further, in response to a case in which the mirroring flag of the target object is not set, the target memory space is allocated to the target object. In this case, the memory mirroring function is not enabled for the target memory space.

The target object is a software module that is in the computer device and that is allowed to occupy a memory space. For example, the target object includes but is not limited to a process, a kernel, a part of a VMA segment of the process, or some of modules in the kernel. The memory allocation request indicates to allocate the target memory space to the target object. In some embodiments, different types of target objects have different mirroring flags. For example, a mirroring flag of the kernel is different from a mirroring flag of the process.

In some cases, that the mirroring flag of the target object is set may also be understood as that a value of the mirroring flag of the target object is 1, and that the mirroring flag of the target object is not set may be understood as that the value of the mirroring flag of the target object is 0. Certainly, the two cases may be reversed. To be specific, that the mirroring flag of the target object is set may also be understood as that the value of the mirroring flag of the target object is 0, and that the mirroring flag of the target object is not set may be understood as that the value of the mirroring flag of the target object is 1. During actual application, whether the mirroring flag of the target object is set may alternatively be represented in another manner. This is not limited in embodiments of this application.

After the memory allocation request of the target object is received, if the mirroring flag of the target object is set, it indicates that currently, the target memory space needs to be allocated to the target object, and the memory mirroring function needs to be enabled for the target memory space. Therefore, after the target memory space is allocated to the target object, the mirroring indication information in each non-data area in the target memory space may be set, to enable the memory mirroring function of the target memory space. In other words, in this embodiment of this application, whether the memory mirroring function needs to be enabled for the memory space allocated to the target object may be determined based on a requirement of the target object.

In the foregoing manner, mirroring protection is performed on the memory that is actually requested to be allocated when the target object runs, to avoid a waste of memory resources caused by a preset mirrored memory that is excessively large, and avoid service interruption caused by a preset mirrored memory that is insufficient.

When the target memory space needs to be released for the target object, the memory mirroring function of the target memory space may alternatively be canceled, to facilitate memory space recycling. To be specific, a memory release request of the target object is received, where the memory release request is used to release the target memory space; and the target memory space allocated to the target object is released, and setting of the mirroring indication information in each non-data area in the target memory space is canceled.

It should be noted that the memory access instruction in this embodiment of this application may be a direct memory access instruction, namely, a DMA instruction, or may be a direct cache access instruction, namely, a DCA instruction. This is not limited in embodiments of this application. When the memory access instruction is a direct memory access instruction, according to the method provided in this embodiment of this application, access, based on the direct memory access instruction in the non-mirrored access mode, to the data in the mirrored memory space of the memory can be rejected. When the memory access instruction is a direct cache access instruction, according to the method provided in this embodiment of this application, access, based on the direct cache access instruction in the non-mirrored access mode, to the data in the mirrored memory space cached in the cache can be rejected.

In a related technology, after receiving a memory access instruction, a processor core needs to obtain, via a memory controller, mirroring indication information stored in a page table entry in a target memory space, and then determine, by using the mirroring indication information, whether the target memory space is a mirrored memory space. In other words, the page table entry in a memory stores the mirroring indication information in the target memory space, and the mirroring indication information is used to determine whether the target memory space is a mirrored memory space. In this embodiment of this application, each cache line that is in the cache and that is used to cache the data in the target memory space caches the mirroring indication information, and the mirroring indication information is used to determine whether the target memory space is a mirrored memory space. In this way, after receiving the memory access instruction sent by the processor core, the cache controller may determine, by using the mirroring indication information in the target cache line corresponding to the memory access instruction, whether the target memory space is a mirrored memory space, and does not need to determine, by accessing the memory, whether the target memory space is a mirrored memory space. This can avoid a problem that a delay increases when the mirroring indication information in the memory is obtained, to improve memory access efficiency. In addition, when the target memory space is a mirrored memory space, and the memory access instruction indicates the non-mirrored access mode, the cache controller may reject execution of the memory access instruction. In this way, the unauthorized access to the mirrored memory data can be avoided, and security of the mirrored memory data can be improved.

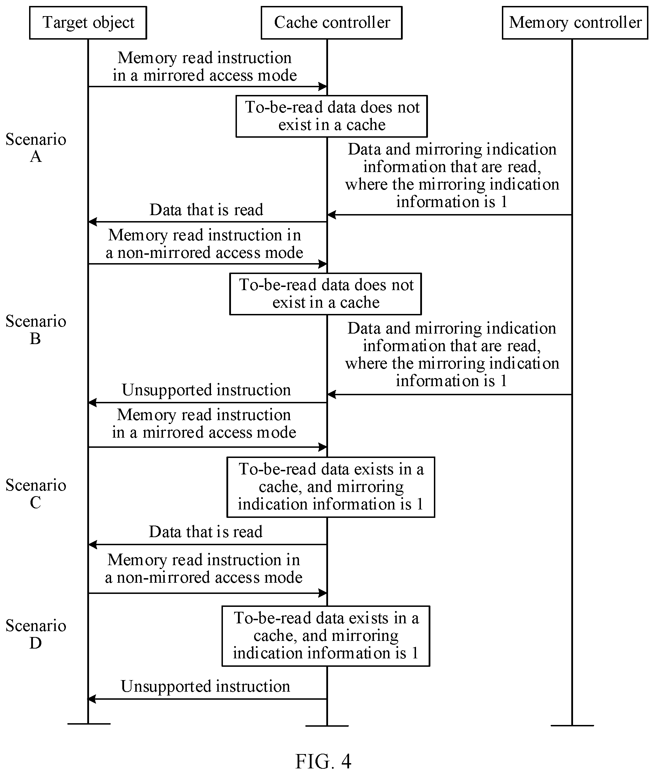

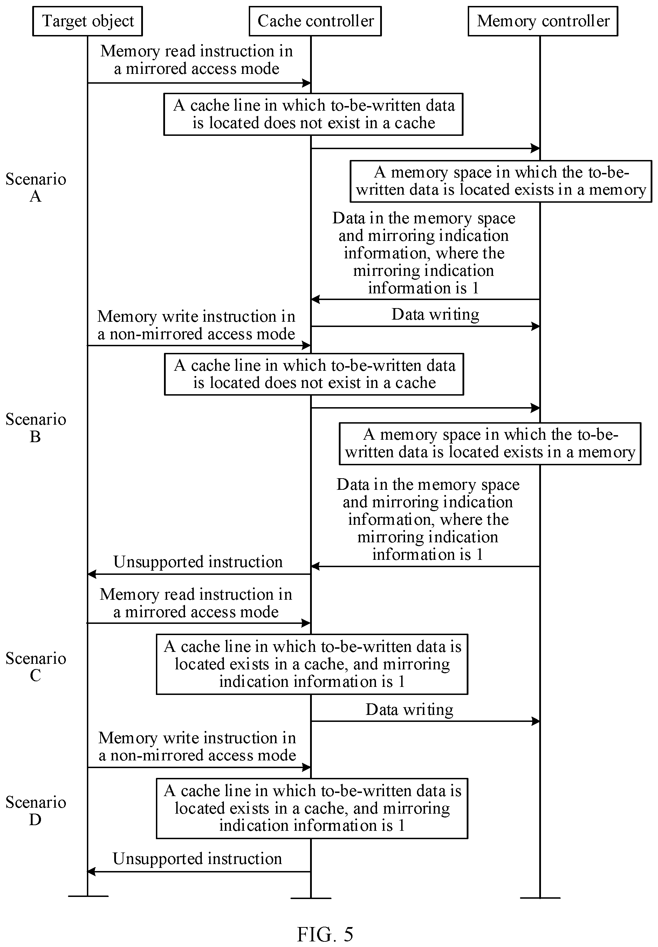

The following describes the method provided in embodiments of this application by using FIG. 4 and FIG. 5. FIG. 4 is described by using a memory read instruction as an example, and FIG. 5 is described by using a memory write instruction as an example. In addition, FIG. 4 and FIG. 5 are described in four scenarios: A, B, C, and D.

Refer to FIG. 4. In the scenario A, a cache controller receives a memory read instruction in a mirrored access mode from a target object, and determines, based on the memory read instruction, that to-be-read data does not exist in a cache. In this case, the cache controller may determine, via a memory controller, that the to-be-read data exists in a memory, and corresponding mirroring indication information is 1, in other words, the mirroring indication information is set. In this way, the memory controller may read the corresponding data and the mirroring indication information from the memory, and send the read data and the mirroring indication information to the cache controller. The cache controller receives the read data and the mirroring indication information, determines that the mirroring indication information is set, and then sends the read data to the target object.

In the scenario B, a cache controller receives a memory read instruction in a non-mirrored access mode from a target object, and determines, based on the memory read instruction, that to-be-read data does not exist in a cache. In this case, the cache controller may determine, via the memory controller, that the to-be-read data exists in a memory, and corresponding mirroring indication information is 1, in other words, the mirroring indication information is set. In this way, the memory controller may read the corresponding data and the mirroring indication information from the memory, and send the read data and the mirroring indication information to the cache controller. The cache controller receives the read data and the mirroring indication information, determines that the mirroring indication information is set, and then sends, to the target object, prompt information indicating that the instruction is not supported, in other words, rejects execution of the memory read instruction.

In the scenario C, a cache controller receives a memory read instruction in a mirrored access mode from a target object, and determines, based on the memory read instruction, that to-be-read data exists in a cache. In this case, the cache controller reads the corresponding data and corresponding mirroring indication information from the cache, and the mirroring indication information is 1, in other words, the mirroring indication information is set. In this way, the cache controller sends the read data to the target object.

In the scenario D, a cache controller receives a memory read instruction in a non-mirrored access mode from a target object, and determines, based on the memory read instruction, that to-be-read data exists in a cache. In this case, the cache controller reads the corresponding data and corresponding mirroring indication information from the cache, and the mirroring indication information is 1, in other words, the mirroring indication information is set. In this way, the cache controller sends, to the target object, prompt information indicating that the instruction is not supported, in other words, rejects execution of the memory read instruction.

Refer to FIG. 5. In the scenario A, a cache controller receives a memory write instruction in a mirrored access mode from a target object, and determines, based on the memory write instruction, that a cache line in which to-be-written data is located does not exist in a cache. In this case, the cache controller may determine, via a memory controller, that a memory space corresponding to the to-be-written data exists in a memory, and corresponding mirroring indication information is 1, in other words, the mirroring indication information is set. In this way, the memory controller may send the mirroring indication information to the cache controller, and then the cache controller writes the corresponding data into the memory.

In the scenario B, a cache controller receives a memory write instruction in a non-mirrored access mode from a target object, and determines, based on the memory write instruction, that a cache line in which to-be-written data is located does not exist in a cache. In this case, the cache controller may determine, via a memory controller, that a memory space corresponding to the to-be-written data exists in a memory, and corresponding mirroring indication information is 1, in other words, the mirroring indication information is set. In this way, the memory controller may send the mirroring indication information to the cache controller. Then, the cache controller sends, to the target object, prompt information indicating that the instruction is not supported, in other words, rejects execution of the memory write instruction.

In the scenario C, a cache controller receives a memory write instruction in a mirrored access mode from a target object, and determines, based on the memory write instruction, that a cache line in which to-be-written data is located exists in a cache. In this case, the cache controller reads the corresponding data and corresponding mirroring indication information from the cache, and the mirroring indication information is 1, in other words, the mirroring indication information is set. In this way, the cache controller writes, via a memory controller, the corresponding data into a memory based on the read data and the to-be-written data.

In the scenario D, a cache controller receives a memory write instruction in a non-mirrored access mode from a target object, and determines, based on the memory write instruction, that to-be-written data exists in a cache. In this case, the cache controller reads the corresponding data and corresponding mirroring indication information from the cache, and the mirroring indication information is 1, in other words, the mirroring indication information is set. In this way, the cache controller sends, to the target object, prompt information indicating that the instruction is not supported, in other words, rejects execution of the memory write instruction.

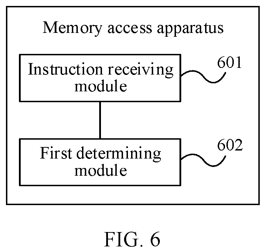

FIG. 6 is a diagram of a structure of a memory access apparatus according to an embodiment of this application. The apparatus may be implemented as a part or a whole of a computer device by using software, hardware, or a combination thereof. The computer device may be the computer device shown in FIG. 1. Refer to FIG. 6. The apparatus includes an instruction receiving module 601 and a first determining module 602.

The instruction receiving module 601 is configured to receive a memory access instruction sent by a processor core, where the memory access instruction is used to access a target memory space.

The first determining module 602 is configured to determine, based on mirroring indication information in a target cache line that is in a cache and that corresponds to the memory access instruction, whether the target memory space is a mirrored memory space.

Optionally, the target cache line includes a data area and a non-data area, the data area stores to-be-accessed data, the non-data area includes a mirroring indication field, and the mirroring indication field is used to record the mirroring indication information.

Optionally, the apparatus further includes:
a second determining module, configured to: if the target cache line does not exist in the cache, determine, based on the mirroring indication information in a target non-data area that is in the target memory space and that corresponds to the memory access instruction, whether the target memory space is a mirrored memory space.

Optionally, the target memory space includes a target data area and the target non-data area, the target data area stores to-be-accessed data, and the target non-data area stores the mirroring indication information.

Optionally, the apparatus further includes:
an instruction execution module, configured to: if the target memory space is a mirrored memory space, and the memory access instruction indicates a mirrored access mode, perform, on the target memory space, an operation corresponding to the memory access instruction.

Optionally, the apparatus further includes:
an instruction rejecting module, configured to: if the target memory space is a mirrored memory space, and the memory access instruction indicates a non-mirrored access mode, reject execution of the memory access instruction.

Optionally, the instruction rejecting module is specifically configured to:
obtain mirroring configuration information of the target memory space, where the mirroring configuration information indicates whether access to the target memory space in the non-mirrored access mode is rejected; and
if the mirroring configuration information indicates that access to the target memory space in the non-mirrored access mode is rejected, reject execution of the memory access instruction.

Optionally, the instruction execution module is further configured to: if the mirroring configuration information indicates that access to the target memory space in the non-mirrored access mode is allowed, perform, on the target memory space, the operation corresponding to the memory access instruction.

Optionally, the memory access instruction is a memory write instruction, the memory write instruction carries target data to be written, and the target memory space includes a primary memory space and a secondary memory space.

The instruction execution module is specifically configured to:
send a memory write notification to the memory controller, to indicate the memory controller to write the target data into both the primary memory space and the secondary memory space.

Optionally, the apparatus further includes:
an allocation request receiving module, configured to receive a memory allocation request of a target object, where the memory allocation request is used to request the target memory space; and
a memory allocation module, configured to: in response to a case in which a mirroring flag of the target object is set, allocate the target memory space to the target object, and set the mirroring indication information in each non-data area in the target memory space.

Optionally, the apparatus further includes:
a release request receiving module, configured to receive a memory release request of the target object, where the memory release request is used to release the target memory space; and
a memory releasing module, configured to release the target memory space allocated to the target object, and cancel setting of the mirroring indication information in each non-data area in the target memory space.

In this embodiment of this application, after receiving the memory access instruction sent by the processor core, a cache controller may determine, based on the mirroring indication information in the target cache line, whether the target memory space is a mirrored memory space. When the target memory space is a mirrored memory space, and the memory access instruction indicates the non-mirrored access mode, the cache controller may reject execution of the memory access instruction. In this way, unauthorized access to mirrored memory data can be avoided, and security of the mirrored memory data is improved. In addition, whether the target memory space is a mirrored memory space is determined by using the mirroring indication information in the target cache line in the cache, to avoid a problem that a delay increases when the mirroring indication information in the memory is obtained, and to improve memory access efficiency.

It should be noted that when the memory access apparatus provided in the foregoing embodiment performs memory access, division of the foregoing functional modules is merely used as an example for description. During actual application, the foregoing functions may be allocated to and completed by different functional modules as required, that is, an internal structure of the apparatus is divided into different functional modules, to implement all or some of the functions described above. In addition, the memory access apparatus provided in the foregoing embodiment belongs to a same concept as the memory access method embodiments. For a specific implementation process thereof, refer to the method embodiments. Details are not described herein again.

An embodiment of this application further provides a processor. The processor includes a cache controller, and the cache controller is configured to implement the memory access method in the foregoing embodiments.

An embodiment of this application further provides a memory access apparatus. The memory access apparatus includes a processor and a storage. The storage is configured to store a computer program for performing the memory access method provided in the foregoing embodiments. The processor is configured to execute the computer program stored in the storage, to implement the memory access method in the foregoing embodiments.

Optionally, the memory access apparatus may further include a communication bus, and the communication bus is configured to establish a connection between the processor and the storage.

An embodiment of this application further provides a computer-readable storage medium. The storage medium stores instructions, and when the instructions are run on a computer, the computer is enabled to perform the memory access method in the foregoing embodiments.

An embodiment of this application provides a computer program product including instructions. When the instructions are run on a computer, the computer is enabled to perform the steps of the memory access method in the foregoing method embodiments. In other words, a computer program is provided. When the computer program is run on a computer, the computer is enabled to perform the memory access method in the foregoing embodiments.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In the descriptions of embodiments of this application, "/" means "or" unless otherwise specified. For example, A/B may represent A or B. The term "and/or" in this specification describes only an association relationship between associated objects and represents that three relationships may exist. For example, A and/or B may represent the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A memory access method, wherein the method comprises:
receiving, by a cache controller, a memory access instruction sent by a processor core, wherein the memory access instruction is used to access a target memory space; and
determining, by the cache controller based on mirroring indication information in a target cache line that is in a cache and that corresponds to the memory access instruction, whether the target memory space is a mirrored memory space.

2. The method according to claim 1, wherein the target cache line comprises a data area and a non-data area, the data area stores to-be-accessed data, the non-data area comprises a mirroring indication field, and the mirroring indication field is used to record the mirroring indication information.

3. The method according to claim 1 or 2, wherein the method further comprises:
if the target cache line does not exist in the cache, determining, by the cache controller based on the mirroring indication information in a target non-data area that is in the target memory space and that corresponds to the memory access instruction, whether the target memory space is a mirrored memory space.

4. The method according to claim 3, wherein the target memory space comprises a target data area and the target non-data area, the target data area stores to-be-accessed data, and the target non-data area stores the mirroring indication information.

5. The method according to any one of claims 1 to 4, wherein the method further comprises:
if the target memory space is a mirrored memory space, and the memory access instruction indicates a mirrored access mode, performing, by the cache controller on the target memory space, an operation corresponding to the memory access instruction.

6. The method according to any one of claims 1 to 5, wherein the method further comprises:
if the target memory space is a mirrored memory space, and the memory access instruction indicates a non-mirrored access mode, rejecting, by the cache controller, execution of the memory access instruction.

7. The method according to claim 6, wherein the rejecting, by the cache controller, execution of the memory access instruction comprises:
obtaining, by the cache controller, mirroring configuration information of the target memory space, wherein the mirroring configuration information indicates whether access to the target memory space in the non-mirrored access mode is rejected; and
if the mirroring configuration information indicates that access to the target memory space in the non-mirrored access mode is rejected, rejecting, by the cache controller, execution of the memory access instruction.

8. The method according to claim 7, wherein after the obtaining, by the cache controller, mirroring configuration information of the target memory space, the method further comprises:
if the mirroring configuration information indicates that access to the target memory space in the non-mirrored access mode is allowed, performing, by the cache controller on the target memory space, the operation corresponding to the memory access instruction.

9. The method according to claim 5 or 8, wherein the memory access instruction is a memory write instruction, the memory write instruction carries target data to be written, and the target memory space comprises a primary memory space and a secondary memory space; and
the performing, by the cache controller on the target memory space, the operation corresponding to the memory access instruction comprises:
sending, by the cache controller, a memory write notification to a memory controller, to indicate the memory controller to write the target data into both the primary memory space and the secondary memory space.

10. The method according to any one of claims 1 to 9, wherein the method further comprises:
receiving a memory allocation request of a target object, wherein the memory allocation request is used to request the target memory space; and
in response to a case in which a mirroring flag of the target object is set, allocating the target memory space to the target object, and setting the mirroring indication information in each non-data area in the target memory space.

11. The method according to claim 10, wherein the method further comprises:
receiving a memory release request of the target object, wherein the memory release request is used to release the target memory space; and
releasing the target memory space allocated to the target object, and canceling setting of the mirroring indication information in each non-data area in the target memory space.

12. A processor, wherein the processor comprises a cache controller, and the cache controller is configured to:
receive a memory access instruction sent by a processor core, wherein the memory access instruction is used to access a target memory space; and
determine, based on mirroring indication information in a target cache line that is in a cache and that corresponds to the memory access instruction, whether the target memory space is a mirrored memory space.

13. The processor according to claim 12, wherein the target cache line comprises a data area and a non-data area, the data area stores to-be-accessed data, the non-data area comprises a mirroring indication field, and the mirroring indication field is used to record the mirroring indication information.

14. The processor according to claim 12 or 13, wherein the cache controller is further configured to:
if the target cache line does not exist in the cache, determine, based on the mirroring indication information in a target non-data area that is in the target memory space and that corresponds to the memory access instruction, whether the target memory space is a mirrored memory space.

15. The processor according to claim 14, wherein the target memory space comprises a target data area and the target non-data area, the target data area stores to-be-accessed data, and the target non-data area stores the mirroring indication information.

16. The processor according to any one of claims 12 to 15, wherein the cache controller is further configured to:
if the target memory space is a mirrored memory space, and the memory access instruction indicates a mirrored access mode, perform, on the target memory space, an operation corresponding to the memory access instruction.

17. The processor according to any one of claims 12 to 16, wherein the cache controller is further configured to:
if the target memory space is a mirrored memory space, and the memory access instruction indicates a non-mirrored access mode, reject execution of the memory access instruction.

18. The processor according to claim 17, wherein the cache controller is specifically configured to:
obtain mirroring configuration information of the target memory space, wherein the mirroring configuration information indicates whether access to the target memory space in the non-mirrored access mode is rejected; and
if the mirroring configuration information indicates that access to the target memory space in the non-mirrored access mode is rejected, reject execution of the memory access instruction.

19. The processor according to claim 18, wherein the cache controller is further configured to:
if the mirroring configuration information indicates that access to the target memory space in the non-mirrored access mode is allowed, perform, on the target memory space, the operation corresponding to the memory access instruction.

20. The processor according to claim 16 or 19, wherein the memory access instruction is a memory write instruction, the memory write instruction carries target data to be written, and the target memory space comprises a primary memory space and a secondary memory space; and
the cache controller is specifically configured to:
send a memory write notification to a memory controller, to indicate the memory controller to write the target data into both the primary memory space and the secondary memory space.

21. The processor according to any one of claims 12 to 20, wherein the processor is further configured to:
receive a memory allocation request of a target object, wherein the memory allocation request is used to request the target memory space; and
in response to a case in which a mirroring flag of the target object is set, allocate the target memory space to the target object, and set the mirroring indication information in each non-data area in the target memory space.

22. The processor according to any one of claims to 21, wherein the processor is further configured to:
receive a memory release request of the target object, wherein the memory release request is used to release the target memory space; and
release the target memory space allocated to the target object, and cancel setting of the mirroring indication information in each non-data area in the target memory space.

23. A memory access apparatus, wherein the apparatus comprises a storage and a processor, the storage is configured to store a computer program, and the processor is configured to execute the computer program to implement the method according to any one of claims 1 to 11.

24. A computer-readable storage medium, wherein the storage medium stores instructions, and when the instructions are run on a computer, the computer is enabled to perform the method according to any one of claims 1 to 11.
